# EUROPÄISCHE PATENTSCHRIFT

(11) **EP 2 269 885 B1**
(45) Veröffentlichungstag und Bekanntmachung des Hinweises auf die Patenterteilung: **23.05.2012**
(21) Anmeldenummer: 10166428.2
(22) Anmeldetag: 18.06.2010
(51) Int. Cl.: B61D 19/02, E06B 7/23, B60J 10/00, B60J 10/08

(54) **Dichtungseinrichtung für eine Fahrzeugtür**
Seal device for a vehicle door
Dispositif d'étanchéité pour une porte de véhicule

(30) Priorität: 30.06.2009 DE 202009008974 U
(43) Veröffentlichungstag der Anmeldung: 05.01.2011
(73) Patentinhaber: GUMMI-WELZ GmbH u. Co. KG GUMMI-KUNSTSTOFFTECHNIK-SCHAUMSTOFFE, 89231 Neu-Ulm (DE)
(72) Erfinder: Fritsche, Wolfgang, 89134, Blaustein (DE); Lindenthal, Gunther, 89176, Asselfingen (DE); Grein, Horst, 34637, Schrecksbach (DE)
(74) Vertreter: König, Beate

(56) Entgegenhaltungen:
- DE-A1- 3 004 107
- DE-C- 911 376
- DE-C1- 3 840 491
- DE-U1-202004 006 968
- US-A- 3 461 611

## Beschreibung

Die Erfindung betrifft eine Dichtungseinrichtung für eine Fahrzeugtür wie aus dem Oberbegriff von Dokument DE 38 40 491 bekannt ist.

Eine so aufgebaute Dichtungseinrichtung für eine Fahrzeugtür mit mindestens einem Fingerschutzprofil ist auch in der EP 1 288 420 B1 beschrieben. Ein elektrischer Sensor ist in einer an der Stirnseite einer vorstehenden Kammer einer Profilleiste aufgenommen, wobei die Kammer zu beiden Seiten schwenkbeweglich ausgebildet ist. Die gegenüberliegende Profilleiste hat eine an die Außenkontur der Kammer angepasste gewölbte Andruckfläche an der Stirnseite und nahe dem Profilfuß einen weiteren elektrischen Sensor. Der Abstand der Andruckfläche von der Stirnseite der vorstehenden Kammer wird eingestellt, um eine definierte Verformung der Kammer im Fall eines Einklemmereignisses zu erzielen.

Eine aus der DE 20 2004 006 968 U1 bekannte Dichtungseinrichtung für eine Fahrgasttür mit Fingerschutzprofil umfasst an den gegenüberliegenden Stirnseiten von zwei Fahrgasttüren jeweils angebrachte Profilleisten, von denen eine stirnseitig eine Vertiefung und die andere eine Rippe aufweist. Die Vertiefung und Rippe sind als mit ihren Seitenwänden ineinandergreifende Nut-Feder-Verbindung ausgebildet, wobei in der Nut vorgesehene Seitenlippen als zusätzliche Abdichtung vorgesehen sind. Durch diesen Aufbau eignet sich die Dichtungseinrichtung nur für einige der im öffentlichen Personenverkehr eingesetzten Türtypen, beispielsweise Schiebetüren und Schwenkschiebetüren.

Der Erfindung liegt die Aufgabe zugrunde, eine Dichtungseinrichtung für eine Fahrzeugtür zu schaffen, die bei Fahrzeugtüren verschiedener Schließ- und Öffnungskinematiken einsetzbar ist und einen Toleranzausgleich für das Türspaltmaß liefert.

Diese Aufgabe ist durch die Erfindung bei einer Dichtungseinrichtung mit den Merkmalen des Anspruchs 1 gelöst. Vorteilhafte Weiterbildungen der erfindungsgemäßen Dichtungseinrichtung sind Gegenstand der Unteransprüche.

Erfindungsgemäß ist die elastisch und/oder federnd deformierbare Wand scharnierartig an der Außen- und Innenseite der Profilleiste angelenkt und bei Druckbeaufschlagung von der Seite her in die Hohlkammer schwenkbar. Dies bewirkt, dass der Kraftaufwand für den Positionswechsel der Wand aus der ersten in die zweite Position gering ist, da die Verstellung mit Hebelarmwirkung erfolgt und dabei nur die Eigensteifigkeit der Wand in der vorkragenden Position überwunden werden muss. Die Wandbewegung kann daher sehr schnell ablaufen.

Ferner ist bei der erfindungsgemäßen Dichtungseinrichtung die elastisch und/oder federnd deformierbare Wand an der Außen- und Innenseite der Profilleiste vorkragend, vorgewölbt oder faltenversehen und mit einer Einwölbung oder Vertiefung gegenüber dem Eingriffsvorsprung der Profilgegenleiste versehen. Der seitliche Eingriff des Gegenprofilvorsprungs ist durch die Kontur sichergestellt. Zugleich kann die Wand durch die Einwölbung leichter eingedrückt und in die zweite Position versetzt werden, indem z.B. der zur Seite weiter vorstehende Bereich zur Mitte hin gebogen oder verschwenkt wird. Bei Geradauslauf von Profilleiste und Profilgegenleiste erleichtert die Einwölbung die Zentrierung bzw. Ausrichtung des Vorsprungs des Gegenprofils.

Durch die vorkragende Kontur der stirnseitig die Hohlkammer begrenzenden Wand ist ein eigensteifer Anschlag bzw. eine Angriffsstelle für den Eingriffsvorsprung der Profilgegenleiste vorgesehen. Im Detail kann die Kontur der Wand unterschiedlich ausgeführt sein, wobei die Wand jedoch für einen Eingriff des Vorsprungs von außen seitlich oder von innen seitlich (SST - Schwenkschiebetür, AST - Außenschwingtür) ausreichend vorstehend und nach innen elastisch deformierbar sein muss, so dass die Wand infolge der Druckbeaufschlagung aus der ersten Position nach innen in die Hohlkammer zur zweiten Position zurückweicht. Vorteilhaft ist die Elastizität der Wand derart, dass sie bei ausreichender Kraftausübung definiert aus der ersten in die zweite Position und umgekehrt wechselt.

Ebenso ist durch die elastische Spannung der Wand sichergestellt, dass bei stirnseitigem oder annähernd stirnseitigem Auflaufen (IST - Innenschwenktür, ST - Schiebetür, FT - Falttür) des Gegenprofils eine definierte Auslösung der Wandverlagerung nach innen in Richtung der Hohlkammer erfolgt, bis die gesamte Wand elastisch in die zweite Position versetzt wird.

Dadurch, dass bei geschlossener Tür die stirnseitige Wand der Profilleiste sich in der einwärtigen zweiten Position befindet, kann je nach Toleranz im Spaltmaß der Vorsprung der Profilgegenleiste die Wand mehr oder weniger stark druckbeaufschlagen bzw. in die Hohlkammer mehr oder weniger weit eindrücken. Die Dichtigkeit ist stets gewährleistet.

Der Eingriffvorsprung der Profilgegenleiste ist vorzugsweise zentral angeordnet. Indessen sind auch Ausführungsformen der erfindungsgemäßen Dichtungseinrichtung vorteilhaft einsetzbar, bei denen der Vorsprung aus der Profilmitte heraus gelegt ist. Dies ist abhängig von den jeweiligen geometrischen Anforderungen des Fahrzeuges, Tors oder dergleichen, an dem die erfindungsgemäße Dichtungseinrichtung vorgesehen ist.

Bei einer vorteilhaften Ausgestaltung der erfindungsgemäßen Dichtprofilleiste ist die elastisch und/oder federnd deformierbare Wand faltenbalgartig ausgeführt und umfasst mindestens zwei Falten, mit denen der Vorsprung der Profilgegenleiste bei Druckbeaufschlagung von der Seite in Eingriff tritt. Es kommt dann durch die seitliche Druckausübung auf die vorstehende jeweilige Falte zu einer Deformation der Wand, bis diese in die zweite Position gelangt. Die dazu erforderliche Kraft hängt von der Ausgestaltung der Falte (Höhe, Winkel, Länge, Wandstärke etc.) ab und bestimmt, wann der Übergang der Wand in die zweite Position erfolgt.

Wenn auch die elastisch und/oder federnd deformierbare Wand einen Vorsprung, vorzugsweise eine Nase, aufweist, kann die Einwärtsbewegung der Hohlkammerwand bei Auflaufen des Gegenprofils rasch eingedrückt werden, da der Fuß des Vorsprungs die Wand besonders stark in die Hohlkammer hinein auslenkt, so dass es rasch zu dem Übergang in die zweite Position kommt. Bei einer Ausführungsform der Profilleiste ist der Vorsprung aus Vollmaterial, so dass die Kraftübertragung besonders zuverlässig abläuft. Der Vorsprung kann aber auch innen einen Hohlraum haben oder hohl sein, sofern die Wandung ausreichend steif ist. Auch der Vorsprung der elastisch und/oder federnd deformierbaren Wand ist vorzugsweise zentral angeordnet für den Eingriff des ebenfalls zentral angeordneten Vorsprungs der Profilgegenleiste. Entsprechend den jeweiligen Einsatzgeometrien kann der Wandvorsprung auch außermittig vorgesehen sein.

Vorteilhaft ist, wenn die elastisch und/oder federnd deformierbare Wand im Bereich des Eingriffs des Vorsprungs der Profilgegenleiste, somit im Faltbereich, eine dünnere Wanddicke hat. Die dünnere Wanddicke unterstützt die elastische Auslenkung der Wand nach innen, wenn direkt Druck ausgeübt wird oder seitlich von außen oder innen eine Einwölbung oder ein Einwärtskippen zur Mitte und nach Innen erfolgt. Insbesondere bei dieser Ausführung läuft die elastische Verformung der Wand in der Art einer Schnappbewegung, die geometriebedingt sehr rasch erfolgt.

Zur Unterstützung der Abdichtung ist bei einer Ausführungsform der erfindungsgemäßen Dichtungseinrichtung an der Außen- und Innenseite der Profilleiste am Wandende eine Außen- und Innenlippe angeformt, die, wenn sich die Wand in der zweiten Position befindet, zur Mitte hin umgebogen sind und zum Vorsprung der Profilgegenleiste gerichtet sind und/oder an diesem und/ oder den Lippen (60, 62) anliegen.

Die Dichtungseinrichtung kann so ausgeführt sein, dass die Außen- und Innenlippe und die Wand in der zweiten Position die Aufnahme für den Vorsprung der Profilgegenleiste bilden. Zweckmäßig hat die Aufnahme für den Vorsprung der Profilgegenleiste eine für einen Toleranzausgleich ausreichende Tiefe.

Vorzugsweise ist die erfindungsgemäße Dichtungseinrichtung mit einem Einklemmschutz ausgestattet.

Die erfindungsgemäße Dichtungseinrichtung kann bei einflügeligen und auch bei zweiflügeligen Türen eingesetzt werden. Das Gegenelement ist im ersten Fall ein Türportal, im zweiten Fall eine Fahrzeugtür.

Im Fall von zweiflügeligen Türen ist es möglich, beide Türflügel gleichzeitig zu betätigen oder einen in der stehenden Position zu belassen. Es ist gleich, ob dann der Türflügel mit der Profilleiste oder der mit der Profilgegenleiste betätigt wird. Durch den ausgeübten Druck ergibt sich bei geschlossener Tür eines Türsystems (ein- und/oder zweiflügelige Türen) durch den Eingriff des Vorsprungs der Profilgegenleite mit der Wand der Profilleiste automatisch eine Zentrierung des oder der Türflügel(s) und damit eine Stabilisierung des Türsystems, wobei der Türflügel zum anderen Türflügel und/oder Portal hin stabilisiert wird.

Die Erfindung wird im folgenden weiter anhand eines Ausführungsbeispiels und der Zeichnung beschrieben. Diese Darstellung dient lediglich zur Veranschaulichungszwecken und soll die Erfindung nicht auf die konkret angegebenen Merkmalskombinationen einschränken. Es zeigen
- Fig. 1: bis 3 schematische Schnittansichten eines Ausfüh- rungsbeispiels einer erfindungsgemäßen Dichtungsein- richtung mit zwei Profilleisten, die die verschiede- nen Betätigungseingriffsmöglichkeiten für den Tür- schließvorgang veranschaulichen,
- Fig. 4: eine schematische Schnittansicht des Ausführungsbei- spiels, die die beiden Profilleisten im Schließein- griff zeigt, und
- Fig. 5: drei beispielhafte Darstellungen, die von oben nach unten den Schließeingriff und Toleranzausgleich bei mittlerem (a), größerem (b) und kleinerem (c) Spalt- maß zeigen.

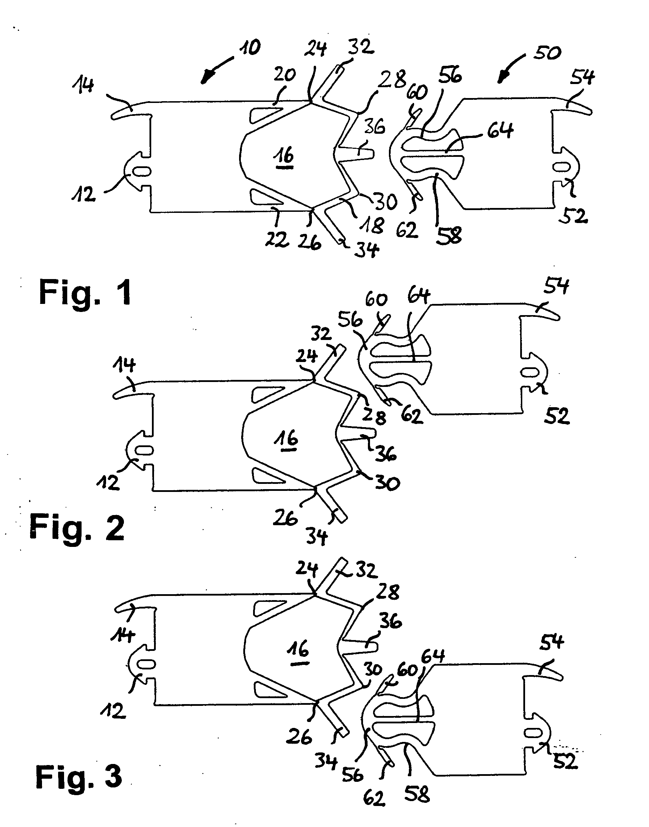

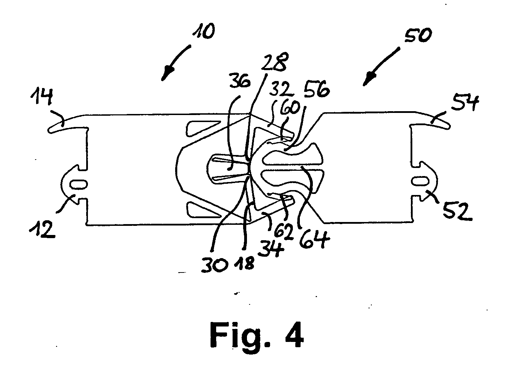

Im folgenden wird anhand von Fig. 1 und 4 der Aufbau eines Ausführungsbeispiels der erfindungsgemäßen Dichtungseinrichtung mit zwei Profilleisten 10, 50 beschrieben. Die Profilleisten sind aus gummielastischem Material, beispielsweise EPDM, und sind mittels eines Profilfußes 12, 52 in zugehörigen Ausnehmungen und Halterungsvorsprüngen eines Türprofils befestigbar. Außenlippen 14, 54 schließen die Profilleisten fußseitig ab. Der Innenaufbau der Profilleisten 10, 50 wird nicht im einzelnen beschrieben. Beispielsweise kann ein Einklemmschutz vorgesehen sein.

Hier betrachtet wird der stirnseitige Bereich der beiden Profilleisten 10, 50, über den die Türabdichtung erfolgt. Die Profilleiste 10 weist stirnseitig eine sich zur Stirnseite hin erweiternde Hohlkammer 16 auf, die stirnseitig durch eine elastisch ausgebildete Wand 18 begrenzt ist. Im Übergangsbereich zwischen der Wand 18 und dem stirnseitigen Ende der Außen- und Innenwand 20, 22 der Profilleiste 10 ist die Materialstärke reduziert, so dass ein Scharniergelenk 24, 26 gebildet ist, auf dessen Funktion später eingegangen wird.

Die Wand 18 ist faltenbalgartig ausgeführt und hat zwei Falten 28, 30, wobei sich vom Scharniergelenk 24, 26 aus jeweils eine Außen- und Innenlippe 32, 34 nach außen und innen erstreckt. Zur Stirnseitenmitte sind die Wandstärken der beiden Falten 28, 30 verringert und in der Mitte steht ein vorzugsweise zentraler Vorsprung (Nase) 36 aus vorzugsweise Vollmaterial vor. In der gezeigten und als erste bezeichneten Position steht die Wand 18 unter elastischer Spannung und ist auf diese Weise ausgesteift.

Die Profilleiste 50 ist die Gegenleiste zur beschriebenen Profilleiste und verjüngt sich zur Stirnseite hin, wo sie mit mit einem vorzugsweise zentralen Vorsprung 56 versehen ist. Der zentrale Vorsprung ist stirnseitig abgerundet und hat am Fuß eine kleine Einschnürung 58. Im vorderen Bereich des zentralen Vorsprungs 56 erstrecken sich zwei flexible Dichtlippen 60, 62 nach außen und hinten. Im Inneren ist der zentrale Vorsprung hohl bis auf eine vorzugsweise längsgerichtete zentrale Aussteifungswand 64. Die Aussteifungswand 64 kann auch anders gestaltet sein oder gänzlich entfallen.

Die Darstellung von Fig. 1 veranschaulicht eine erste Art der Schließkinematik, zu der die Profilleiste 10 in der Lage ist. Dabei ist es ohne Einfluss auf die Funktion, ob die Profilleiste 10 und/oder 50 sich alleine bewegt oder sich beide gemeinsam für den Schließvorgang oder auch anschließend fürs Öffnen bewegen. Kommen die beiden Vorsprünge 36, 56 im Verlauf der direkt zulaufendenden Türschließbewegung (FT, IST, AST, SST, ST) miteinander in Kontakt, dann drückt der Vorsprung 56 die Nase 36 in Richtung der Hohlkammer 16, wobei die Falten 28, 30 zueinander hin bewegt werden und zugleich ein Kippen um das Scharnier 24, 26 erfolgt. Durch die Ausgestaltung kommt es dabei an einer Stelle des Bewegungsablaufs zu einem sehr schnellen Umklappen der Wand 18 in die zweite Position, die in Fig. 4 gezeigt ist.

In der in Fig. 4 gezeigten zweiten Position sitzt die Nase 36 der Wand 18 in Anlage an den benachbarten Wandabschnitten der Falten 28, 30. Der zentrale Vorsprung 56 des Gegenprofils befindet sich ebenfalls in Eingriff mit den Falten 28, 30 und der Nase 36. Des weiteren liegen außen die beiden Lippen 32, 34 an, wobei diese sich in Eingriff mit den Lippen 60, 62 befinden. Dadurch ist eine zusätzliche Abdichtung vorgesehen.

Wenn der Türöffnungsvorgang eingeleitet wird, löst sich der Schließeingriff und die Falten 28, 30 werden freigegeben. Infolge der Entlastung und zugleich der Vorspannung der Wand 18 in der zweiten Position, schnappt die Wand 18 rasch wieder in die erste Position zurück.

Fig. 2 und 3 veranschaulichen den Schließvorgang bei seitlicher Schließauslösung bzw. -betätigung von außen oder von innen. Auch hier ist die Schließ- und Öffnungskinematik unabhängig davon, ob die Tür ein- oder zweiflügelig ist und ob ein oder zwei Türflügel betätigt werden und welcher Türflügel betätigt wird. Der Betätigungseingriff zwischen dem zentralen Vorsprung 56 der Gegenleiste 50 erfolgt nicht zentral an der Wand 18 bzw. deren Nase 36 wie bei dem vorbeschriebenen Beispiel, sondern an der Falte 28 (Fig. 2) oder an der Falte 30 (Fig. 3). Die Falte 28 oder 30 wird zur Profilmitte hin bewegt bzw. verschwenkt, wobei diese Bewegung um die Scharnierachse 24 bzw. 26 abläuft. Zugleich wird die Nase 36 nach innen, d.h. in Richtung Hohlkammer 16, bewegt. Am Ende befinden sich die beiden Profilleisten 10, 50 in der in Fig. 4 gezeigten Position. Beim Öffnungsvorgang sind die Bewegungsabläufe umgekehrt.

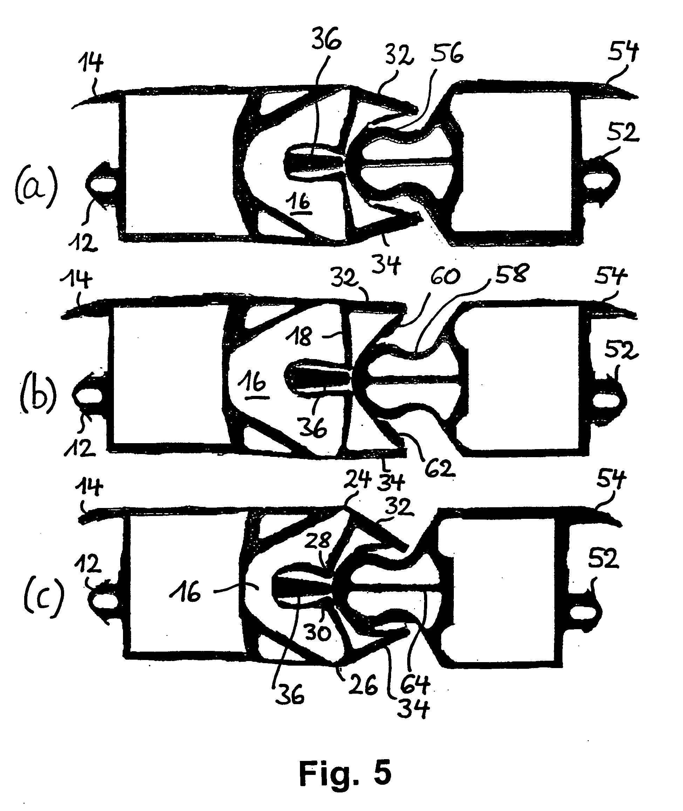

Fig. 5 veranschaulicht den Eingriff zwischen den beiden Profilleisten in der Schließposition für unterschiedliche Spaltmaße. Diese sind mittel (a), größer (b) und kleiner (c). Die Ausgestaltung der Wand 18 und des Vorsprungs 56 lassen einen guten Toleranzausgleich zu, bei dem eine zuverlässige Abdichtung gewährleistet ist.

## Patentansprüche

1. Dichtungseinrichtung für eine Fahrzeugtür, umfassend eine gummielastische Profilleiste (10), die an der Stirnseite der Fahrzeugtür angeordnet ist, sowie eine Profilgegenleiste (50), die an einem Gegenelement angeordnet ist, wobei die Profilgegenleiste (50) einen Vorsprung (56) aufweist und die elastische Profilleiste (10) eine Aufnahme für den Vorsprung (56) der Profilgegenleiste aufweist,
wobei die Profilleiste (10) stirnseitig eine Hohlkammer (16) aufweist, die zur Stirnseite hin durch eine elastisch und/oder federnd deformierbare Wand (18) begrenzt ist,
wobei die elastisch und/oder federnd deformierbare Wand (18) in einer ersten Position von der Profilstirnseite aus vorkragend und in einem Zustand mit elastischer Spannung ist,
wobei die elastisch und/oder federnd deformierbare Wand (18) durch Druckbeaufschlagung von der Stirnseite her durch den Vorsprung (56) der Profilgegenleiste (50) aus der ersten Position in Richtung der Hohlkammer (16) in eine zweite Position bringbar ist, die weiter einwärts in der Hohlkammer (16) ist und in der sie unter Vorspannung steht, solange sich die Wand (18) in Eingriff mit dem Vorsprung (56) der Profilgegenleiste (50) befindet, und
wobei die elastisch und/oder federnd deformierbare Wand (18) bei Lösen des Eingriffs mit dem Vorsprung (56) der Profilgegenleiste (50) durch vorzugsweise elastische Rückstellkräfte in die erste Position zurückgeführt wird,
**dadurch gekennzeichnet, dass**
die elastisch und/ oder federnd deformierbare Wand (18) scharnierartig an der Außen- und Innenseite der Profilleiste (10) angelenkt ist und
die elastisch und/oder federnd deformierbare Wand (18) an der Außen- und Innenseite der Profilleiste (10) vorkragend, vorgewölbt oder faltenversehen ist sowie mit einer Einwölbung oder Vertiefung für den Eingriff mit dem Vorsprung (56) der Profilgegenleiste versehen ist,
wobei die elastisch und/oder federnd deformierbare Wand bei Druckbeaufschlagung von der Seite her in die Hohlkammer (16) verschwenkt wird.

2. Dichtungseinrichtung nach Anspruch 1, **dadurch gekennzeichnet, dass** der Vorsprung (56) der Profilgegenleiste zentral angeordnet ist.

3. Dichtungseinrichtung nach Anspruch 1 oder 2, **dadurch gekennzeichnet, dass** die elastisch und/oder federnd deformierbare Wand (18) faltenbalgartig ausgeführt ist und mindestens zwei Falten (28, 30) umfasst, mit denen der Vorsprung (56) der Profilgegenleiste (50) bei Druckbeaufschlagung von der Seite in Eingriff tritt.

4. Dichtungseinrichtung nach Ansprüch 1, **dadurch gekennzeichnet, dass** die elastisch und/oder federnd deformierbare Wand (18) einen Vorsprung (36) aufweist.

5. Dichtungseinrichtung nach Anspruch 4, **dadurch gekennzeichnet, dass** der Vorsprung (36) zentral angeordnet ist.

6. Dichtungseinrichtung nach Anspruch 4, **dadurch gekennzeichnet, dass** der Vorsprung (36) eine Nase ist.

7. Dichtungseinrichtung nach Anspruch 5 oder 6, **dadurch gekennzeichnet, dass** der Vorsprung (36) aus Vollmaterial ist.

8. Dichtungseinrichtung nach Anspruch 5 oder 6, **dadurch gekennzeichnet, dass** der Vorsprung (36) hohl ist.

9. Dichtungseinrichtung nach einem der Ansprüche 1 bis 8, **dadurch gekennzeichnet, dass** die elastisch und/oder federnd deformierbare Wand (18) im Bereich für den Eingriff mit dem Vorsprung (56) der Profilgegenleiste oder Faltbereich eine dünnere Wanddicke hat.

10. Dichtungseinrichtung nach einem der Ansprüche 1 bis 9, **dadurch gekennzeichnet, dass** an der Außen- und Innenseite der Profilleiste (10) am Wandende eine Außen- und Innenlippe (32, 34) angeformt ist, die, wenn sich die Wand (18) in der zweiten Position befindet, zur Mitte hin umgebogen sind und zum Vorsprung (56) der Profilgegenleiste (50) gerichtet sind und/oder an diesem anliegen.

11. Dichtungseinrichtung nach Anspruch 10, **dadurch gekennzeichnet, dass** die Außen- und Innenlippe (32, 34) und die Wand (18) in der zweiten Position die Aufnahme für den Vorsprung (56) der Profilgegenleiste bilden.

12. Dichtungseinrichtung nach einem der Ansprüche 1 bis 11, **dadurch gekennzeichnet, dass** die Aufnahme für den Vorsprung (56) der Profilgegenleiste (50) eine für einen Toleranzausgleich ausreichende Tiefe hat.

13. Dichtungseinrichtung nach einem der Ansprüche 1 bis 12, **dadurch gekennzeichnet, dass** ein Einklemmschutz vorgesehen ist.

14. Dichtungseinrichtung nach einem der Ansprüche 1 bis 13, **dadurch gekennzeichnet, dass** das Gegenelement ein Türportal oder eine Fahrzeugtür ist.

## Claims

1. Sealing device for a vehicle door comprising a rubber-elastic profile strip (10), which is disposed on the end face of the vehicle door, and a counterpart profile strip (50), which is disposed on a counterpart element, wherein the counterpart profile strip (50) has a protrusion (56) and the elastic profile strip (10) has a receiver for the protrusion (56) of the counterpart profile strip,
wherein, on its end face, the profile strip (10) has a hollow chamber (16) which is defined towards the end face by an elastically and/or resiliently deformable wall (18),
wherein the elastically and/or resiliently deformable wall (18) projects in a first position from the profile end face and is in a state of elastic tension,
wherein the elastically and/or resiliently deformable wall (18) can be moved by application of pressure from the end face through the protrusion (56) of the counterpart profile strip (50) from the first position in the direction of the hollow chamber (16) to a second position which is further inwards in the hollow chamber (16) and in which it is under pretensioning as long as the wall (18) is in engagement with the protrusion (56) of the counterpart profile strip (50), and
wherein the elastically and/or resiliently deformable wall (18) is returned to the first position by preferably elastic return forces upon release of the engagement with the protrusion (56) of the counterpart profile strip (50),
**characterised in that**
the elastically and/or resiliently deformable wall (18) is articulated in a hinge-like manner on the outer and inner side of the profile strip (10) and
the elastically and/or resiliently deformable wall (18) is projecting, bulging or provided with folds on the outer and inner side of the profile strip (10) and is provided with an inward curvature or depression for engagement with the protrusion (56) of the counterpart profile strip,
wherein, upon application of pressure, the elastically and/or resiliently deformable wall is pivoted from the side into the hollow chamber (16).

2. Sealing device as claimed in claim 1, **characterised in that** the protrusion (56) of the counterpart profile strip is centrally disposed.

3. Sealing device as claimed in claim 1 or 2, **characterised in that** the elastically and/or resiliently deformable wall (18) is formed in the manner of a bellows and has at least two folds (28, 30), with which the protrusion (56) of the counterpart profile strip (50) comes into engagement upon application of pressure from the side.

4. Sealing device as claimed in claim 1, **characterised in that** the elastically and/or resiliently deformable wall (18) has a protrusion (36).

5. Sealing device as claimed in claim 4, **characterised in that** the protrusion (36) is centrally disposed.

6. Sealing device as claimed in claim 4, **characterised in that** the protrusion (36) is a lug.

7. Sealing device as claimed in claim 5 or 6, **characterised in that** the protrusion (36) is made from solid material.

8. Sealing device as claimed in claim 5 or 6, **characterised in that** the protrusion (36) is hollow.

9. Sealing device as claimed in any one of claims 1 to 8, **characterised in that** the elastically and/or resiliently deformable wall (18) has a thinner wall thickness in the region for the engagement with the protrusion (56) of the counterpart profile strip or fold region.

10. Sealing device as claimed in any one of claims 1 to 9, **characterised in that** an outer and inner lip (32, 34) are integrally formed on the outer and inner side of the profile strip (10) at the end of the wall, which lips - when the wall (18) is in the second position - are bent over towards the middle and are directed towards the protrusion (56) of the counterpart profile strip (50) and/or lie against this protrusion.

11. Sealing device as claimed in claim 10, **characterised in that** the outer and inner lip (32, 34) and the wall (18) in the second position form the receiver for the protrusion (56) of the counterpart profile strip.

12. Sealing device as claimed in any one of claims 1 to 11, **characterised in that** the receiver for the protrusion (56) of the counterpart profile strip (50) has a depth sufficient for an equalisation of tolerances.

13. Sealing device as claimed in any one of claims 1 to 12, **characterised in that** anti-trap protection is provided.

14. Sealing device as claimed in any one of claims 1 to 13, **characterised in that** the counterpart element is a door portal or a vehicle door.

## Revendications

1. Dispositif d'étanchéité pour portière de véhicule, ledit dispositif d'étanchéité comportant une baguette profilée (10) en caoutchouc élastique qui est disposée du côté frontal de la portière de véhicule, ainsi qu'une baguette profilée conjuguée (50) qui est disposé au niveau d'un élément conjugué, la baguette profilée conjuguée (50) comportant une saillie (56) et la baguette profilée élastique (10) comportant un logement destiné à la saillie (56) de la baguette profilée conjuguée,
la baguette profilée (10) comportant du côté frontal une cavité (16) qui est limitée en direction du côté frontal par une paroi (18) déformable par effet ressort et/ou élastiquement,
la paroi (18) déformable par ressort et/ou élastiquement saillant dans une première position depuis le côté frontal profilé et étant dans un état avec tension élastique,
la paroi (18) déformable par effet ressort et/ou élastiquement pouvant être amenée, sous l'effet d'une pression exercée depuis le côté frontal par la saillie (56) de la baguette profilée conjuguée (50), de la première position en direction de la cavité (16) jusque dans une deuxième position qui est davantage en dedans dans la cavité (16) et dans laquelle elle est soumise à une précontrainte tant que la paroi (18) est en engagement avec la saillie (56) de la baguette profilée conjuguée (50), et
la paroi (18) déformable par effet ressort et/ou élastiquement étant ramenée dans la première position par des forces de rappel de préférence élastiques lorsqu'elle est libérée de l'engagement avec la saillie (56) de la baguette profile conjuguée (50),
**caractérisé en ce que**
la paroi (18) déformable par effet ressort et/ou élastiquement est montée de façon articulée à la manière d'une charnière sur le côté intérieur et extérieur de la baguette profilée (10) et
la paroi (18) déformable par effet ressort et/ou élastiquement est dotée d'une pré-incurvation ou de plis en faisant saillie au niveau du côté intérieur et extérieur de la baguette profilée (10) et est également dotée d'une concavité ou renfoncement destiné à l'engagement avec la saillie (56) de la baguette profilée conjuguée,
la paroi déformable par effet ressort et/ou élastiquement étant pivotée jusque dans la cavité (16) lorsqu' une pression est exercée depuis le côté.

2. Dispositif d'étanchéité selon la revendication 1, **caractérisé en ce que** la saillie (56) de la baguette profilée conjuguée est disposée au centre.

3. Dispositif d'étanchéité selon la revendication 1 ou 2, **caractérisé en ce que** la paroi (18) déformable par effet ressort et/ou élastiquement est réalisée à la manière d'un soufflet, et comporte au moins deux plis (28, 30) avec lesquels la saillie (56) de la baguette profilée conjuguée (50) vient en engagement lorsqu'une pression est exercée depuis le côté.

4. Dispositif d'étanchéité selon la revendication 1, **caractérisé en ce que** la paroi (18) déformable par effet ressort et/ou élastiquement comporte une saillie (36).

5. Dispositif d'étanchéité selon la revendication 4, **caractérisé en ce que** la saillie (36) est disposée au centre.

6. Dispositif d'étanchéité selon la revendication 4, **caractérisé en ce que** la saillie (36) est un ergot.

7. Dispositif d'étanchéité selon la revendication 5 ou 6, **caractérisé en ce que** la saillie (36) est en une matière pleine.

8. Dispositif d'étanchéité selon la revendication 5 ou 6, **caractérisé en ce que** la saillie (36) est creuse.

9. Dispositif d'étanchéité selon l'une des revendications 1 à 8, **caractérisé en ce que** la paroi (18) déformable par effet ressort et/ou élastiquement possède une épaisseur de paroi plus fine dans la région destinée à l'engagement avec la saillie (56) de la baguette profilée conjuguée ou dans la région des plis.

10. Dispositif d'étanchéité selon l'une des revendications 1 à 9, **caractérisé en ce que** au niveau des côtés intérieur et extérieur de la baguette profilée (10), à l'extrémité de la paroi, est conformée des lèvres extérieure et intérieure (32, 34) qui, lorsque la paroi (18) se trouve dans la deuxième position, sont incurvées en direction du milieu et sont orientées en direction de la saillie (56) de la baguette profilée conjuguée (50) et/ou portent contre celle-ci.

11. Dispositif d'étanchéité selon la revendication 10, **caractérisé en ce que** les lèvres extérieure et intérieure (32, 34) et la paroi (18) forment, dans la deuxième position, le logement destiné à la saillie (56) de la baguette profilée conjuguée.

12. Dispositif d'étanchéité selon l'une des revendications 1 à 11, **caractérisé en ce que** le logement destiné à la saillie (56) de la baguette profilée conjuguée (50) a une profondeur suffisante à une compensation de tolérances.

13. Dispositif d'étanchéité selon l'une des revendications 1 à 12, **caractérisé en ce qu'**il est vu prévu un moyen anti-coincement.

14. Dispositif d'étanchéité selon l'une des revendications 1 à 13, **caractérisé en ce que** l'élément conjugué est un montant de porte ou une portière de véhicule.
